# EUROPEAN PATENT APPLICATION

(11) **EP 2 278 170 A1**
(43) Date of publication of application: **26.01.2011**
(21) Application number: 10169700.1
(22) Date of filing: 15.07.2010
(51) Int. Cl.: F16B 5/02, F16B 41/00

(54) **Safety locking element, particularly for couplings of the screw-and-nut type**

(30) Priority: 20.07.2009 IT BO20090463
(71) Applicant: Satech Safety Technology S.p.A., 20122 Milano (IT)
(72) Inventor: Palatinszky, Gergo, 1117 Budapest XI (HU)
(74) Representative: Modiano, Micaela Nadia

(57) **Abstract**

A safety locking element, particularly for couplings of the type with a screw (2) and a nut (3), adapted to mutually couple at least two distinct elements (4a, 4b). The element is constituted substantially by a ring (5) provided with means (6) for anchoring to a non-threaded portion of the shank (2a) of the screw (2). At least one protrusion (7) extends externally from the lateral surface (5a) of the ring (5) and protrudes in a radial direction, the protrusion (7) being elastically deformable in order to allow the insertion of the screw (2) in the seat; the elastic reaction of the protrusion (7), once insertion has occurred, contrasts by interference the extraction of the screw (2) from its seat.

## Description

The present invention refers to a safety locking element, particularly for couplings of the screw-and-nut type.

As is known, the necessity often arises to prevent free access to certain work areas, in order to guard against the danger of possible tampering or damage, as well as the danger of accident and injury, in particular where hazardous machinery and/or tools are in operation.

In order therefore to make access to such areas impossible, nowadays there is widespread use of fences and protective measures, constituted by a plurality of modular panels arranged vertically and varying in size according to the specific requirements.

The panels are mutually coupled, two by two, by means of an upright which is interposed between them: each upright (typically tubular) is in fact fixed to each panel by means of tightening a screw with a respective nut (thus implementing a coupling of the type known as a bolt).

It should also be noted that the protective measures employed in work environments must in fact observe the national and international directives which impose strict safety criteria to be followed.

One of these directives (European Machinery Directive, 2006/42/EC) requires that the connections of the safety fences be constituted by captive components, i.e. components which, following dismantling and assembly operations, it is not possible to lose.

It appears evident that this directive is intended to prevent the situation where the person assigned to the maintenance or installation of the protective measures, owing to slackness or practical impossibility, does not complete the correct mutual fixing of the parts following the loss of one or more of the components (consider the very real possibility of losing a screw or a nut in a factory shed during the above mentioned operations), thus leaving a potential source of danger for operators.

The embodiment illustrated above, which achieves the mutual connection of the panels by means of simple elements such as screws and nuts, which are physically separated from the panels in order to dismantle them, therefore presents the evident drawback of not meeting the above mentioned safety criteria.

The aim of the present invention is to solve the above mentioned problems, by providing a safety locking element that ensures the captivity of the various components that go to make up the screw-and-nut coupling, so guarding against the danger of loss of one or more of such elements following assembly and dismantling operations.

Within this aim, an object of the invention is to provide a kit for screw-and-nut coupling that fulfils the restrictions and criteria imposed by the national and international reference directives.

Another object of the invention is to provide a safety locking element that ensures a high level of reliability in operation.

A further object of the invention is to devise a safety locking element that can be easily made from elements and materials that are easily sourced on the market.

A further object of the invention is to devise a safety locking element that can be made at low cost and safely applied.

This aim and these objects, as well as others which will become better apparent hereinafter, are achieved by a safety locking element, particularly for couplings of the type with a screw and a nut adapted to mutually couple at least two distinct elements, **characterized in that** it is constituted substantially by a ring provided with means for anchoring to a non-threaded portion of the shank of the screw, at least one protrusion extending externally from the lateral surface of said ring and protruding in a radial direction, said protrusion being elastically deformable to allow the insertion of the screw in the seat, the elastic reaction of said protrusion, once insertion has occurred, contrasting by interference the extraction of the screw from its seat.

Further characteristics and advantages of the invention will become better apparent from the detailed description that follows of a preferred, but not exclusive, embodiment of the safety locking element according to the invention, illustrated by way of non-limiting example in the accompanying drawings, wherein:

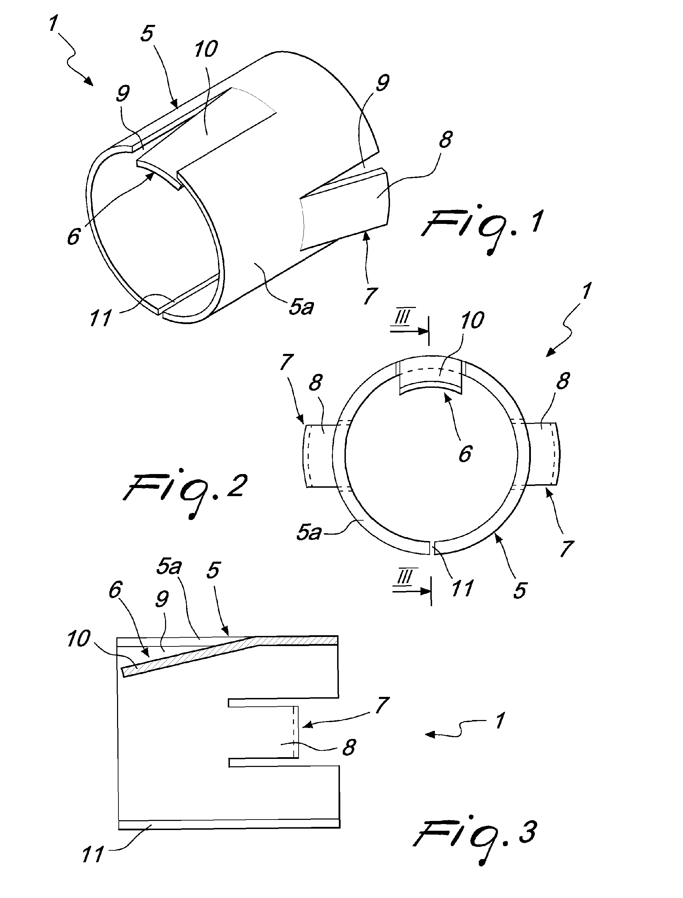

Figure 1 shows the safety locking element according to the invention, in a perspective view;
Figure 2 shows the safety locking element according to the invention, in a front elevation view;
Figure 3 is a sectional view of Figure 2, taken along the line III-III;

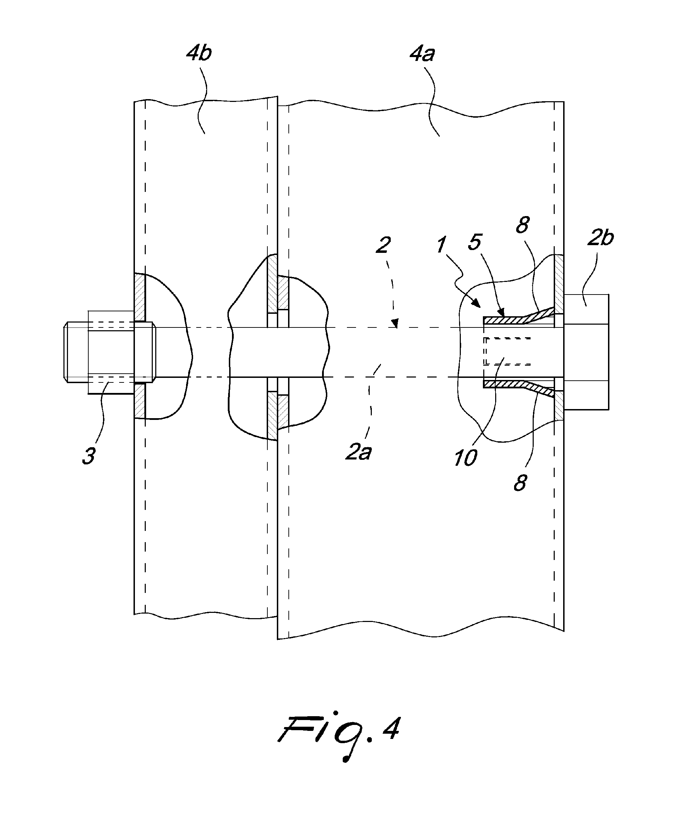

Figure 4 shows an application of the safety locking element, in a side elevation view.

With reference to the figures, a safety locking element according to the invention, generally designated by the reference numeral 1, is particularly indicated for couplings of the type with a screw 2 and a nut 3 (i.e. with a bolt), adapted to mutually couple at least two distinct elements 4a, 4b.

It should be made clear from this point onward that, according to the preferred application of the element 1 according to the invention, the elements 4a and 4b are constituted by an upright (indicated in the figures with 4a and being for example tubular in shape) and by the frame of a modular panel (indicated in the figures with 4b and being also, for example, tubular in shape). The uprights are typically interposed between pairs of modular panels to be connected (by means of at least two couplings of screws 2 and nuts 3), in order to constitute a fence to be deployed as protection of hazardous areas or machinery, in particular inside places of work such as factories, workshops, laboratories and the like.

Reference will therefore be made to such specific application hereinafter in the present discussion but the possibility is not excluded of using the element 1, as well as the screw 2 and the nut 3, on different types of element 4a, 4b, where the specific requirements indicate their use.

According to the invention, the element 1 is constituted substantially by a ring 5 which is provided with means 6 for anchoring to a non-threaded portion of the shank 2a of the screw 2, such non-threaded portion normally being interposed between the threaded portion and the head 2b.

At least one protrusion 7 extends externally from the lateral surface 5a of the ring 5 and protrudes in a radial direction; the protrusion 7 is elastically deformable in order to allow the insertion of the screw 2 in the seat. Once insertion has occurred, the elastic reaction of the protrusion 7, which develops following its deformation, contrasts by interference the extraction of the screw 2 from its seat (by abutting for example against its mouth), thus ensuring the impossibility of losing the screw 2, even if, following dismantling operations, it is not coupled with the nut 3, and therefore achieving the intended aim.

According to an embodiment of particular practical interest, cited for the purposes of non-limiting illustration of the application of the invention, the protrusion 7 is constituted substantially by an external wing 8 the orientation of which is substantially axial and the length of which for example is less than the axial length of the ring 5. This external wing 8 is fixed at one of its sides to the lateral surface 5a of the ring 5 (such lateral surface 5a having, at the external wing 8, a respective recess 9).

As can be seen from the accompanying figures, the external wing 8 protrudes externally and is able to bend by elastic forcing upon insertion of the screw 2 in the seat.

Subsequently, the elastic reaction causes the external wing 8 to press against the walls and/or the mouth of the seat, therefore developing by interference a force that contrasts the sliding of the screw 2, such force being capable of preventing the extraction of the screw 2.

In particular, according to the preferred embodiment, the locking element 1 comprises two protrusions 7, arranged at diametrically opposite sides of the ring 5.

Usefully, the anchoring means 6 are constituted substantially by an internal wing 10 (having similar shape and orientation to those of the external wings 8 described previously), which is fixed to the lateral surface 5a of the ring 5 and which protrudes internally. A recess 9 can also be provided at the internal wing 10 along the lateral surface 5a of the ring 5.

The internal wing 10 is elastically deformable in order to permit the mounting of the ring 5 onto the non-threaded portion of the shank 2a of the screw 2; once mounting has occurred, any slippage of the ring 5 on the shank 2a of the screw 2 causes the internal wing 10 to abut against the thread of the shank 2a so as to prevent the unintended extraction of the ring 5.

Advantageously, the lateral surface 5a of the ring 5 has a longitudinal notch 11, which is adapted to increase the elastic deformability of the ring 5, thus allowing an expansion thereof during fitting on the screw 2 and in particular ensuring that it can slide on the threaded portion of the shank 2a (which has a larger diameter). Subsequently, once the non-threaded portion of the shank 2a (of smaller diameter) has been reached, the presence of the notch 11 allows the contraction of the ring 5 in order to restore its rest configuration and in order to stably couple it with the screw 2.

With reference to the preferred embodiment, the ring 5 is made of a material that is preferably chosen among a metallic material, a metallic alloy and a synthetic resin; however, the possibility is not excluded of using different types of material to make the ring 5, where it would be preferable to do so.

The operation of the safety locking element according to the invention is as follows.

Faced with the need to stably couple two distinct elements 4a, 4b such as the upright and the frame of a modular protective measure, it is possible to use a screw 2 and a nut 3 to achieve a coupling of the known type (a bolt) and mutually tighten the above mentioned elements 4a, 4b.

To ensure the captivity of the screw 2 (thus guarding against the danger of its being lost during any subsequent dismantling operations), it is possible to anchor the element 1 according to the invention to it.

By exploiting the presence of the longitudinal notch 11, the ring 5 can be made to slide along the shank 2a of the screw 2, until it is positioned at the non-threaded portion thereof.

The presence of the anchoring means 6 guards against the danger of a possible extraction of the ring 5, since, as already seen, the internal wing 10 abuts against the threading and contrasts the slippage of the ring 5 on the shank 2a.

The external diameter of the ring 5 is such as to allow insertion of the screw 2, with or without the ring 5 mounted on it, into the seat for receiving it which is formed in the elements 4a, 4b.

The force that is applied in order to accommodate the screw 2 in the seat makes it possible in this phase to elastically deform the external wings 8, which otherwise, if they protruded in a radial direction, would hinder insertion.

Once the screw 2 has been inserted, it is possible to achieve the coupling with the nut 3, to tighten together the upright and the frame of the modular protective measure.

If later on the screw 2 is unscrewed, for example for temporary maintenance or repair operations on the various components in play, the presence of the element 1 prevents the screw 2 from coming out of its seat, no other forms of mutual coupling being present.

The elastic return of the external wings 8, which were deformed during insertion, cause them to press against the internal walls and/or the mouth of the seat, so applying by interference a reaction that contrasts any extraction, and making such extraction possible only if the operator applies a traction force of significant intensity (so determining the breakage of the ring 5).

It thus appears evident that even after loosening the screw 2 and the subsequent decoupling from the nut 3, the screw 2 will still remain coupled to the seat formed in the elements 4a, 4b (more precisely, it will remain accommodated in the upright or in the frame of the modular protection measure) and the technician can thus easily have it constantly to hand and use it again as soon as it is needed.

The kit for screw-and-nut coupling of distinct elements comprises at least one screw 2 which can be mated with a nut 3 in order to mutually couple at least two distinct elements 4a, 4b, and a safety locking element 1.

The element 1 is constituted substantially by a ring 5 which is provided with means 6 for anchoring to a non-threaded portion of the shank 2a of the screw 2; at least one protrusion 7 extends externally from the lateral surface 5a of the ring 5 and protrudes in a radial direction.

The protrusion 7 is elastically deformable in order to allow the insertion of the screw 2 into the seat and, once insertion has occurred, the elastic reaction of the protrusion 7 contrasts by interference the extraction of the screw 2 from a seat defined in at least one of the two elements 4a, 4b.

According to an embodiment of important practical interest, the kit comprises at least one nut 3, which can be coupled with the screw 2, for mutually fixing the two elements 4a, 4b; the nut 3 is preferably of the self-gripping type.

With particular reference to the embodiment just described, the possibility of using nuts 3 of the self gripping type also gives this latter element the distinctive characteristic of being captive (so fully meeting the reference European directives).

Indeed, as is known, self-gripping nuts 3 have flanges that are milled or otherwise suitably shaped on one of the two bases: if therefore during mounting this flange is faced towards the elements 4a, 4b to be mutually tightened, then during tightening the milling locally and superficially deforms the element 4a, 4b penetrating inside it, thus achieving, by interference, a stable coupling, even in the absence of the screw 2.

Also, following operations involving temporary dismantling, and with reference to the embodiment shown in the figure, after loosening the screw 2 the decoupling is achieved of the element 4a (the upright) from the element 4b (the frame of the modular protective measure), but the screw 2 is kept coupled to the upright by the element 1 while the nut 3 remains gripped to the frame, with no possibility therefore of loss and in full observance of the regulations.

In practice it has been found that the safety locking element according to the invention fully achieves the intended aim, since the choice to anchor to the screw a ring that is provided with an elastically deformable protrusion that is capable of developing an elastic reaction such as to contrast, once insertion has occurred, the extraction of the screw from its seat ensures the captivity of the screw itself, therefore guarding against the danger of its being lost following assembly and dismantling operations.

The invention thus conceived is susceptible of numerous modifications and variation, all of which are within the scope of the appended claims; in addition, all the details may be replaced by other technically equivalent elements.

In the embodiments illustrated, individual characteristics shown in relation to specific examples may in reality be interchanged with other, different characteristics, existing in other embodiments.

In addition, it should be noted that anything found to be already known during the patenting process is understood not to be claimed and to be the subject of a disclaimer.

In practice the materials employed, as well as the dimensions, may be any according to requirements and to the state of the art.

The disclosures in Italian Patent Application No. BO2009A00046 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A safety locking element, particularly for couplings of the type with a screw (2) and a nut (3) adapted to mutually couple at least two distinct elements (4a, 4b), **characterized in that** it is constituted substantially by a ring (5) provided with means (6) for anchoring to a non-threaded portion of the shank (2a) of the screw (2), at least one protrusion (7) extending externally from the lateral surface (5a) of said ring (5) and protruding in a radial direction, said protrusion (7) being elastically deformable to allow the insertion of the screw (2) in the seat, the elastic reaction of said protrusion (7), once insertion has occurred, contrasting by interference the extraction of the screw (2) from its seat.

2. The safety locking element according to claim 1, **characterized in that** said protrusion (7) is constituted substantially by an external wing (8), which is fixed at one of its sides to said lateral surface (5a) of said ring (5), said external wing (8) protruding externally and being able to bend by elastic forcing upon insertion of the screw (2) in the seat.

3. The safety locking element according to one or more of the preceding claims, **characterized in that** it comprises two of said protrusions (7), which are arranged on diametrically opposite sides of said ring (5).

4. The safety locking element according to one or more of the preceding claims, **characterized in that** said anchoring means (6) are constituted substantially by an internal wing (10), which is fixed to said lateral surface (5a) of said ring (5) and protrudes internally, said internal wing (10) being elastically deformable in order to allow the mounting of said ring (5) on the non-threaded portion of the shank (2a) of the screw (2), any slippage of said ring (5) on the shank (2a) of the screw (2) causing said internal wing (10) to abut against the thread of the shank (2a) to prevent the unintended extraction of said ring (5).

5. The safety locking element according to one or more of the preceding claims, **characterized in that** said lateral surface (5a) of said ring (5) has a longitudinal notch (11), which is adapted to increase the elastic deformability of said ring (5) and allow an expansion thereof during fitting on the screw (2).

6. The safety locking element according to one or more of the preceding claims, **characterized in that** said ring (5) is made of a material that is preferably chosen among a metallic material, a metallic alloy and a synthetic resin.

7. A kit for screw-and-nut coupling of distinct elements, **characterized in that** it comprises at least one screw (2), which can be mated with a nut (3) in order to mutually couple at least two distinct elements (4a, 4b), and a safety locking element (1), constituted substantially by a ring (5) provided with means (6) for anchoring to a non-threaded portion of the shank (2a) of said screw (2), at least one protrusion (7) extending externally from the lateral surface (5a) of said ring (5) and protruding in a radial direction, said protrusion (7) being elastically deformable in order to allow the insertion of the screw (2) in the seat, the elastic reaction of said protrusion (7), once insertion has occurred, contrasting by interference the extraction of said screw (2) from a seat formed in at least one of the two elements (4a, 4b).

8. The kit according to claim 7, **characterized in that** it comprises at least one nut (3), which can be mated with said screw (2), said nut (3) being preferably of the self-gripping type.
